# EUROPÄISCHE PATENTSCHRIFT

(11) **EP 3 290 179 B1**
(45) Veröffentlichungstag und Bekanntmachung des Hinweises auf die Patenterteilung: **07.08.2019**
(21) Anmeldenummer: 17187113.0
(22) Anmeldetag: 21.08.2017
(51) Int. Cl.: B29C 44/36, B29C 44/44, F16J 9/08, F16J 15/48, B29K 105/04

(54) **EINRICHTUNG ZUM FÜLLEN EINER FORM**
DEVICE FOR FILLING A MOULD
DISPOSITIF DE REMPLISSAGE D'UN MOULE

(30) Priorität: 30.08.2016 DE 102016116102
(43) Veröffentlichungstag der Anmeldung: 07.03.2018
(73) Patentinhaber: Thorsten, Michel, 56355 Lautert (DE); Erlenbach, Nico, 56355 Nastätten (DE)
(72) Erfinder: Thorsten, Michel, 56355 Lautert (DE); Erlenbach, Nico, 56355 Nastätten (DE)
(74) Vertreter: Klein, Thomas

(56) Entgegenhaltungen:
- WO-A1-94/11657
- WO-A1-2015/091906
- DE-A1- 2 353 852
- DE-B- 1 214 863
- JP-A- S5 868 546

## Beschreibung

Die Erfindung bezieht sich auf eine Einrichtung zum Füllen einer Form mit aufschäumbarem Material, mit einem an der Form angeordneten Füllrohr, das an seinem einen Ende einen in die Formkammer der Form mündenden Einfüllkanal aufweist, wobei über das Füllrohr und den Füllkanal das aufschäumbare Material in die Formkammer einführbar ist, mit einer axial durch das Füllrohr ragenden axial bewegbar antreibbaren Verschlußstange, deren der Form zugewandtes Ende einen Verschlußkolben aufweist, der zum Verschließen des Einfüllkanals in den Einfüllkanal einführbar ist und deren der Form abgewandtes Ende aus dem Füllrohr herausragt und einen Antriebskolben aufweist, der in einem Zylinder axial bewegbar und ist und den Zylinderinnenraum in eine Schließarbeitskammer und eine Öffnungsarbeitskammer unterteilt, wobei die Schließarbeitskammer und die Öffnungsarbeitskammer zum Bewegungsantrieb des Antriebskolbens alternierend mit Druckluft beaufschlagbar sind, mit einer radial umlaufenden Ringnut in der umlaufenden Mantelfläche des Verschlußkolbens, in dem ein elastischer Dichtring angeordnet ist, durch den ein Ringspalt zwischen Verschlußkolben und Einfüllkanal abdichtbar ist.

Bei derartigen Einrichtungen zum Füllen einer Form ist es bekannt das aufschäumbare Material mittels dieser Einrichtung als Granulat in die Form einzubringen, indem dem Füllrohr das Granulat zugeführt und durch Druckgas oder Druckluft durch den Einfüllkanal in die Form gefördert wird. Nach Füllung der Form mit dem aufschäumbaren Material wird die Schließkammer des Zylinders mit Druckluft beaufschlagt, so daß der Verschlußkolben in den Füllkanal einfährt und damit den Innenraum der Form von dem Füllrohr absperrt. Danach wird das aufschäumbare Material mit Wärme beaufschlagt, welche ein vollständiges Aufschäumen und Versintern des aufschäumbaren Materials bewirkt. Dies kann z.B. dadurch erfolgen, daß Dampf in den Innenraum der Form eingeleitet wird. Während dieses Aufschäumvorgangs muß der Innenraum der Form gegenüber dem Füllrohr dicht abgeschlossen sein, damit kein Dampf oder dessen Kondensat in das Füllrohr gelangen kann, was zu Störungen des Betriebs führen würde. Bei anderen Wärmebeaufschlagungsmethoden als der Dampfbeaufschlagung ist es wichtig, daß keine kühle Luft vom Füllrohr über den Einfüllkanal in die Formkammer gelangen kann, da dies den Aufschäumvorgang beeinträchtigt. Dies soll durch den Verschlußkolben mit seinem radial aus der Ringnut herausragenden Dichtring erfolgen.

Durch den heißen Dampf kommt es zu Ermüdung des von dem Dampf beaufschlagten Dichtungswerkstoffs. Bei der in einem Arbeitstakt arbeitenden Einrichtung fährt der Verschlußkolben alternierend in den Einfüllkanal ein und aus. Dies führt bei jedem Arbeitstakt zu einer Reibbeanspruchung des Dichtrings und damit zu einem schnellen Verschleiß des Dichtrings was wiederum eine häufige Produktionsunterbrechung und einen Austausch des Dichtrings erfordert.

Aus der DE 23 53 852 A1 ist eine Einrichtung zum Füllen einer Form mit aufschäumbarem Material der eingangs genannten Art bekannt.

Aus der JP S58 68546 A ist die Druckbeaufschlagung eines in einer Ringnut angeordneten Dichtrings am Boden der Ringnut bekannt.

Aufgabe der Erfindung ist es daher eine Einrichtung zum Füllen einer Form der eingangs genannten Art zu schaffen, die einfach aufgebaut ist, wenig Bauraum benötigt und eine lange Standzeit des Dichtrings ermöglicht.

Diese Aufgabe wird erfindungsgemäß dadurch gelöst, daß die radiale Dicke des Dichtrings geringer ist als die Tiefe der Ringnut und eine Druckluftquelle über einen Druckkanal mit dem Boden der Ringnut im Verschlußkolben verbunden ist, wobei die Druckluftquelle die Schließarbeitskammer ist.

Dabei kann der Dichtring jeglichen geeigneten Querschnitt wie z.B. rund, quadratisch, elliptisch aufweisen. In dem Arbeitstakt, in dem die Einrichtung zum Füllen der Form betrieben wird, erfolgt nach in den Einfüllkanal eingefahrenem Verschlußkolben eine Druckluftbeaufschlagung der Ringnut am Boden der Ringnut. Dadurch wird der durch seine radial nach innen gerichtete Vorspannung vorher vollständig in der Ringnut befindliche Dichtring radial erweitert und mit seiner radial umlaufenden Außenfläche dichtend an die Innenwand des Einfüllkanals gedrückt. Dabei erfolgt eine Abdichtung sowohl von der Formkammer zum Füllrohr als auch vom Füllrohr zur Formkammer. Da der Dichtring beim Einfahren des Verschlußkolbens in den Einfüllkanal nicht aus der Ringnut herausragt, kann er auch nicht reibend an der Innenwand des Einfüllkanals entlangbewegt werden und vorzeitig verschleißen.

Vor dem anschließenden Ausfahren des Verschlußkolbens aus dem Einfüllkanal wird die Druckluftbeaufschlagung der Ringnut beendet, so daß die Ringdichtung aufgrund ihrer radial nach innen gerichteten Vorspannung wieder vollständig in die Ringnut eintaucht und beim Ausfahren ebenfalls keine Reibung des Dichtrings an der Innenwand des Einfüllkanals erfolgt.

Nun kann über das Füllrohr und den Einfüllkanal im nächsten Takt ein Füllen der Form mit granulatförmigem aufschäumbarem Material erfolgen.

Da die Schließarbeitskammer im gleichen Arbeitstakt mit Druckluft beaufschlagbar ist wie die Ringnut, ist den Aufbau wesentlich vereinfachend und in Doppelfunktion die Druckluftquelle die druckluftbeaufschlagte Schließarbeitskammer.

Um ein gleichmäßiges radiales Erweitern und Verringern des Dichtrings zu erreichen, kann der Druckkanal an mehreren gleichmäßig am Umfang des Bodens der Ringnut verteilten Mündungsstellen in die Ringnut münden.

Um bei den hohen Drücken, die in der Form beim Aufschäumen des aufschäumbaren Materials entstehen, sicher das Innere des Füllrohres von dem Inneren der Form zu trennen, können in der radial umlaufenden Mantelfläche des Verschlußkolbens mehrere zueinander parallele radial umlaufende Ringnuten ausgebildet sein, in denen jeweils ein elastischer Dichtring angeordnet ist, dessen radiale Dicke geringer ist als die Tiefe der jeweiligen Ringnut, wobei durch die Dichtringe der Ringspalt zwischen Verschlußkolben und Einfüllkanal abdichtbar ist und jeder Boden der Ringnuten über einen Druckkanal mit der Druckluftquelle verbunden ist.

Damit wird auch ein Luftdurchlaß vom Füllrohr in die Formkammer mit hoher Sicherheit vermieden, wenn das Füllrohr zu Befüllen der Formkammer mit schäumbarem Material permanent unter Druck steht.

In einfacher Ausbildung und keinen zusätzlichen Bauraum erfordernd ist vorzugsweise der Druckkanal durch die Verschlußstange hindurch geführt.

Der hohe Druck im Inneren der Form während des Schäumens des schäumbaren Materials wirkt auch auf den Verschlußkolben und möchte diesen in Öffnungsrichtung verschieben. Dem wirkt der den Antriebskolben beaufschlagende Druck in der Schließarbeitskammer entgegen. Damit der Antriebskolben die Schließarbeitskammer von der zu diesem Zeitpunkt drucklosen Öffnungsarbeitskammer sicher trennt, muß ein Arbeitskolbendichtring mit ausreichender radialer Kraft an der zylindrischen Innenwand des Zylinderinnenraums anliegen.

Um bei einem Öffnungshub von Verschlußkolben, Verschlußstange und Arbeitskolben die Reibung zu reduzieren, kann der Antriebskolben an seiner radial umlaufenden Mantelfläche eine Arbeitskolbenringnut aufweisen, in der ein Arbeitskolbendichtring angeordnet ist, wobei die Druckluftquelle über einen weiteren Druckkanal mit dem Boden der Arbeitskolbenringnut im Antriebskolben verbunden ist.

Die Reibung zwischen Arbeitskolbendichtring und Innenwand des Zylinderinnenraums kann sogar ganz eliminiert werden, wenn der Arbeitskolbendichtring eine geringere radiale Dicke als der Tiefe der Arbeitskolbenringnut aufweist.

Zur gleichmäßigen radialen Beaufschlagung des Arbeitskolbendichtrings kann der weitere Druckkanal an mehreren gleichmäßig am Umfang des Bodens der Arbeitskolbenringnut verteilten Mündungsstellen in die Arbeitskolbenringnut münden.

Besonders kostengünstig ist es herstellbar, wenn der Druckkanal und der weitere Druckkanal durch einen einzigen durch den Arbeitskolben und die Verschlußstange geführten Axialdruckkanal gebildet sind.

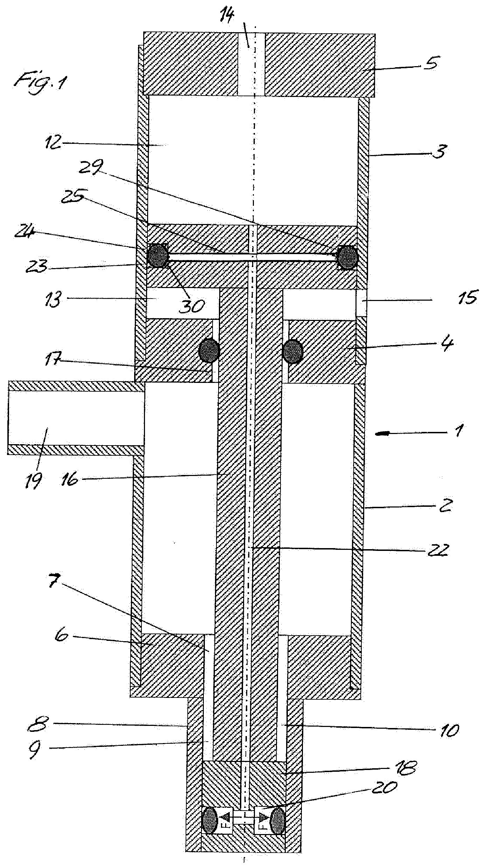

Ein Ausführungsbeispiel der Erfindung ist in der Zeichnung dargestellt und wird im Folgenden näher beschrieben. Es zeigen
- Figur 1: eine Einrichtung zum Füllen einer Form bei verschlossenem Einfüllkanal und druckluftbeaufschlagter Schließarbeitskammer im Längschnitt

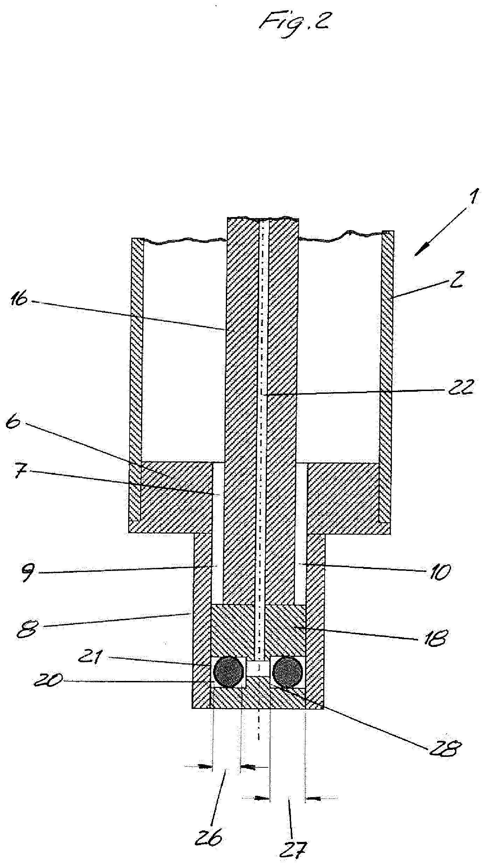

- Figur 2: einen Ausschnitt der Einrichtung nach Figur 1 bei verschlossenem Einfüllkanal und nichtdruckluftbeaufschlagter Schließarbeitskammer im Längschnitt.

Die dargestellte Einrichtung zum Füllen einer Form weist ein Rohr 1 auf, dessen unterer Teil ein Füllrohr 2 und dessen oberer Teil einen Zylinder 3 bildet.

Eine Trennwand 4 trennt den Bereich des Füllrohres 2 von dem Bereich des Zylinders 3.

An seinem freien Ende ist der Zylinder 3 durch einen Zylinderverschluß 5 verschlossen.

Das dem Zylinderverschluß 5 entgegengesetzte Ende des Rohres 1 ist durch einen Füllrohrverschluß 6 verschlossen, der eine zentrische Durchgangsbohrung 7 aufweist. An dem Füllrohrverschluß 6 ist koaxial ein rohrartiges Mundstück 8 angeordnet, dessen Bohrung 9 den gleichen Durchmesser wie die Durchgangsbohrung 7 aufweist.

Durchgangsbohrung 7 und Bohrung 9 bilden einen Einfüllkanal 10.

Mittels des Mundstücks 8 ist die Einrichtung mit einer nicht dargestellten Form verbunden, wobei der Einfüllkanal 10 in die Formkammer der Form führt.

Der Zylinderinnenraum des Zylinders 3 ist durch einen axial verschiebbaren Antriebskolben 11 in eine dem Zylinderverschluß 5 nähere Schließarbeitskammer 12 und eine der Trennwand 4 nähere Öffnungsarbeitskammer 13 unterteilt.

Über einen Schließarbeitskammeranschluß 14 in dem Zylinderverschluß 5 ist die Schließarbeitskammer 12 druckbeaufschlagbar und druckentlastbar.

An dem der Trennwand 4 nahen Ende des Zylinders 3 mündet radial ein Öffnungsarbeitskammeranschluß 15 in die Öffnungsarbeitskammer 13, durch die die Öffnungsarbeitskammer 13 druckentlastbar und druckbeaufschlagbar ist.

An dem Antriebskolben 11 ist koaxial einseitig eine Verschlußstange 16 angeordnet, die abgedichtet durch eine Durchführbohrung 17 in der Trennwand 4 in das Füllrohr 2 ragt und an ihrem der Form zugewandten Ende einen Verschlußkolben 18 trägt, der den gleichen Außendurchmesser wie der Innendurchmesser des Einfüllkanals 10 aufweist.

In der dargestellten Schließposition befindet sich der Antriebskolben 11 in seiner unteren Endlage und der Verschlußkolben 18 ist in den Einfüllkanal 10 eingefahren.

In der nicht dargestellten Offenposition befindet sich der Arbeitskolben 11 in seiner oberen Endlage und der Verschlußkolben 18 befindet sich außerhalb des Einfüllkanals 10 in dem Füllrohr 2.

In dieser Offenposition kann das über einen Einfüllstutzen 19 in das Füllrohr 2 eingefüllte granulatartige aufschäumbare Material durch den Einfüllkanal 10 in die Formkammer der Form eingefüllt werden.

Nach dem Befüllen der Formkammer wird über den Schließarbeitskammeranschluß 14 die Schließarbeitskammer 12 mit Druckluft beaufschlagt. Gleichzeitig ist die Öffnungsarbeitskammer 13 über den Öffnungsarbeitskammeranschluß 15 entlüftet.

Durch die Druckluftbeaufschlagung der Schließkammer 14 wird der Antriebskolben 11 in seine untere Endlage und der Verschlußkolben 18 in den Einfüllkanal 10 verschoben und damit der Einfüllkanal 10 verschlossen.

In der zylindrischen Mantelfläche des Verschlußkolbens 18 ist eine radial umlaufende Ringnut 20 ausgebildet, in der ein Dichtring 21 angeordnet ist, der axial an den Seitenwänden der Ringnut 20 in Anlage ist und eine radial nach innen gerichtete Vorspannung aufweist. Weiterhin ist die radiale Dicke 26 des in die Ringnut 20 eingelegten Dichtrings 21 geringer als die Tiefe 27 der Ringnut 20.

Ein durch den Antriebskolben 11, die Verschlußstange 16 und den Verschlußkolben 18 geführter Axialdruckkanal 22 mündet am Boden 28 der Ringnut 20 in die Ringnut 20.

Weiterhin ist in der zylindrischen Mantelfläche des Antriebskolbens 11 eine radial umlaufende Arbeitskolbenringnut 23 ausgebildet, in der ein Arbeitskolbendichtring 24 angeordnet ist, der axial an den Seitenwänden der Arbeitskolbenringnut 23 in Anlage ist.

Der Axialdruckkanal 22 ist über eine Querbohrung 25 im Antriebskolben 11 mit der Arbeitskolbenringnut 23 verbunden, wobei die Querbohrung 25 am Boden 30 der Arbeitskolbenringnut 23 in die Arbeitskolbenringnut 23 mündet.

Wird nun die Schließkammer 14 druckluftbeaufschlagt und der Antriebskolben 11 in seine untere Endlage sowie der Verschlußkolben 18 in den Einfüllkanal 10 verschoben, so pflanzt sich der Druck in der Schließkammer 14 über den Axialdruckkanal 22 auch unter den Dichtring 21 in die Ringnut 20 sowie unter den Arbeitskolbendichtring 24 in die Arbeitskolbenringnut 23 fort und preßt den Dichtring 21 unter radialer Erweiterung seines Durchmessers gegen die Innenwand des Einfüllkanals 10. Weiterhin preßt der Druck den Arbeitskolbendichtring 24 gegen die Innenwand des Zylinders 3.

Der bei dem folgenden Schäumen des schäumbaren Materials in der Formkammer entstehende hohe Druck kann nun nicht den Verschlußkolben 18 verschieben und sich über den Dichtring 21 abbauen.

Ist der Schäumvorgang beendet, wird die Schließarbeitskammer 12 über den Schließarbeitskammeranschluß 14 entlüftet und die Öffnungsarbeitskammer 13 über den Öffnungsarbeitskammeranschluß 15 mit Druckluft beaufschlagt.

Damit fährt der Antriebskolben 11 in seine angehobene Endlage und der Verschlußkolben 18 aus dem Einfüllkanal 10 heraus.

### Bezugszeichenliste

- 1: Rohr
- 2: Füllrohr
- 3: Zylinder
- 4: Trennwand
- 5: Zylinderverschluß
- 6: Füllrohrverschluß
- 7: Durchgangsbohrung
- 8: Mundstück
- 9: Bohrung
- 10: Einfüllkanal
- 11: Antriebskolben
- 12: Schließarbeitskammer
- 13: Öffnungsarbeitskammer
- 14: Schließarbeitskammeranschluß
- 15: Öffnungsarbeitskammeranschluß
- 16: Verschlußstange
- 17: Durchführbohrung
- 18: Verschlußkolben
- 19: Einführstutzen
- 20: Ringnut
- 21: Dichtring
- 22: Axialdruckkanal
- 23: Arbeitskolbenringnut
- 24: Arbeitskolbendichtring
- 25: Querbohrung
- 26: radiale Dicke Dichtring
- 27: Tiefe Ringnut
- 28: Boden Ringnut
- 29: Boden Arbeitskolbendichtring

## Patentansprüche

1. Einrichtung zum Füllen einer Form mit aufschäumbarem Material, mit einem an der Form angeordneten Füllrohr (2), das an seinem einen Ende einen in die Formkammer der Form mündenden Einfüllkanal (10) aufweist, wobei über das Füllrohr (2) und den Einfüllkanal (10) das aufschäumbare Material in die Formkammer einführbar ist, mit einer axial durch das Füllrohr (2) ragenden axial bewegbar antreibbaren Verschlußstange (16), deren der Form zugewandtes Ende einen Verschlußkolben (18) aufweist, der zum Verschließen des Einfüllkanals (10) in den Einfüllkanal (10) einführbar ist und deren der Form abgewandtes Ende aus dem Füllrohr (2) herausragt und einen Antriebskolben (11) aufweist, der in einem Zylinder (3) axial bewegbar und ist und den Zylinderinnenraum in eine Schließarbeitskammer (12) und eine Öffnungsarbeitskammer (13) unterteilt, wobei die Schließarbeitskammer (12) und die Offnungsarbeitskammer (13) zum Bewegungsantrieb des Antriebskolbens (11) alternierend mit Druckluft beaufschlagbar sind, mit einer radial umlaufenden Ringnut (20) in der umlaufenden Mantelfläche des Verschlußkolbens (18), in dem ein elastischer Dichtring (21) angeordnet ist, durch den ein Ringspalt zwischen Verschlußkolben (18) und Einfüllkanal (10) abdichtbar ist, **dadurch gekennzeichnet, daß** die radiale Dicke (26) des Dichtrings (21) geringer ist als die Tiefe (27) der Ringnut (20) und eine Druckluftquelle über einen Druckkanal mit dem Boden (28) der Ringnut (20) im Verschlußkolben (18) verbunden ist, wobei die Druckluftquelle die Schließarbeitskammer (12) ist.

2. Einrichtung nach Anspruch 1, **dadurch gekennzeichnet, daß** der Druckkanal an mehreren gleichmäßig am Umfang des Bodens (28) der Ringnut (20) verteilten Mündungsstellen in die Ringnut (20) mündet.

3. Einrichtung nach einem der vorhergehenden Ansprüche, **dadurch gekennzeichnet, daß** in der radial umlaufenden Mantelfläche des Verschlußkolbens mehrere zueinander parallele radial umlaufende Ringnuten ausgebildet sind, in denen jeweils ein elastischer Dichtring angeordnet ist, dessen radiale Dicke geringer ist als die Tiefe der jeweiligen Ringnut, wobei durch die Dichtringe der Ringspalt zwischen Verschlußkolben und Einfüllkanal abdichtbar ist und jeder Boden der Ringnuten über einen Druckkanal mit der Druckluftquelle verbunden ist.

4. Einrichtung nach einem der vorhergehenden Ansprüche, **dadurch gekennzeichnet, daß** der Druckkanal durch die Verschlußstange (16) hindurch geführt ist.

5. Einrichtung nach einem der vorhergehenden Ansprüche, **dadurch gekennzeichnet, daß** der Antriebskolben (11) an seiner radial umlaufenden Mantelfläche eine Arbeitskolbenringnut (23) aufweist, in der ein Arbeitskolbendichtring (24) angeordnet ist, wobei die Druckluftquelle über einen weiteren Druckkanal (22) mit dem Boden (29) der Arbeitskolbenringnut (23) im Antriebskolben (11) verbunden ist.

6. Einrichtung nach Anspruch 4, **dadurch gekennzeichnet, daß** der Arbeitskolbendichtring (24) eine geringere radiale Dicke als der Tiefe der Arbeitskolbenringnut (23) aufweist.

7. Einrichtung nach einem der Ansprüche 5 und 6, **dadurch gekennzeichnet, daß** der weitere Druckkanal an mehreren gleichmäßig am Umfang des Bodens der Arbeitskolbenringnut verteilten Mündungsstellen in die Arbeitskolbenringnut mündet.

8. Einrichtung nach einem der Ansprüche 4 und 5 bis 7, **dadurch gekennzeichnet , daß** der Druckkanal und der weitere Druckkanal durch einen einzigen durch den Arbeitskolben (11), die Verschlußstange (16) und den Verschlußkolben (18) geführten Axialdruckkanal (22) gebildet sind.

## Claims

1. Device for filling a mould with foamable material, having a filling tube (2) which is arranged on the mould and which, at one of its ends, has a filling channel (10) which opens into the mould chamber of the mould, wherein the foamable material is able to be introduced into the mould chamber via the filling tube (2) and the filling channel (10), having a closure rod (16) which projects axially through the filling tube (2) and is able to be driven in an axially movable manner and whose end which faces the mould has a closure piston (18), which is able to be introduced into the filling channel (10) for the purpose of closing off the filling channel (10), and whose end which faces away from the mould projects from the filling tube (2) and has a drive piston (11), which is axially movable in a cylinder (3) and subdivides the cylinder interior into a closure working chamber (12) and an opening working chamber (13), wherein, for the movement drive of the drive piston (11), the closure working chamber (12) and the opening working chamber (13) are able to be pressurized with compressed air in an alternating manner, having a radially encircling annular groove (20) in the encircling lateral surface of the closure piston (18), in which annular groove there is arranged an elastic sealing ring (21) by which an annular gap between the closure piston (18) and the filling channel (10) is able to be sealed off, **characterized in that** the radial thickness (26) of the sealing ring (21) is less than the depth (27) of the annular groove (20) and a compressed-air source is connected to the base (28) of the annular groove (20) in the closure piston (18) via a pressure channel, wherein the compressed-air source is the closure working chamber (12).

2. Device according to Claim 1, **characterized in that** the pressure channel opens into the annular groove (20) at multiple opening points, which are uniformly distributed on the circumference of the base (28) of the annular groove (20).

3. Device according to either of the preceding claims, **characterized in that**, in the radially encircling lateral surface of the closure piston, there are formed multiple mutually parallel, radially encircling annular grooves, in which there is arranged in each case an elastic sealing ring whose radial thickness is less than the depth of the respective annular groove, wherein the annular gap between the closure piston and the filling channel is able to be sealed off by the sealing rings and each base of the annular grooves is connected to the compressed-air source via a pressure channel.

4. Device according to one of the preceding claims, **characterized in that** the pressure channel is led through the closure rod (16).

5. Device according to one of the preceding claims, **characterized in that** the drive piston (11) has, on its radially encircling lateral surface, a working piston annular groove (23), in which a working piston sealing ring (24) is arranged, wherein the compressed-air source is connected to the base (29) of the working piston annular groove (23) in the drive piston (11) via a further pressure channel (22).

6. Device according to Claim 4, **characterized in that** the working piston sealing ring (24) has a radial thickness which is less than the depth of the working piston annular groove (23).

7. Device according to either of Claims 5 and 6, **characterized in that** the further pressure channel opens into the working piston annular groove at multiple opening points, which are uniformly distributed on the circumference of the base of the working piston annular groove.

8. Device according to one of Claims 4 and 5 to 7, **characterized in that** the pressure channel and the further pressure channel are formed by a single axial pressure channel (22), which is led through the working piston (11), the closure rod (16) and the closure piston (18).

## Revendications

1. Dispositif de remplissage d'un moule avec un matériau expansible, avec un tube de remplissage (2) agencé sur le moule, qui présente à sa première extrémité un canal de remplissage (10) débouchant dans la chambre de moule du moule, dans lequel le matériau expansible peut être introduit dans la chambre de moule par le tube de remplissage (2) et le canal de remplissage (10), avec une barre de fermeture (16) pénétrant axialement à travers le tube de remplissage (2) et pouvant être entraînée en mouvement axial, dont l'extrémité tournée vers le moule présente un piston de fermeture (18), qui peut être introduit dans le canal de remplissage (10) pour fermer le canal de remplissage (10) et dont l'extrémité éloignée du moule sort du tube de remplissage (2) et présente un piston d'entraînement (11), qui est mobile axialement dans un cylindre (3) et qui divise l'espace intérieur du cylindre en une chambre de travail de fermeture (12) et une chambre de travail d'ouverture (13), dans lequel la chambre de travail de fermeture (12) et la chambre de travail d'ouverture (13) peuvent être en alternance alimentées en air comprimé pour l'entraînement du mouvement du piston d'entraînement (11), avec une rainure annulaire radialement périphérique (20) dans la surface latérale périphérique du piston de fermeture (18), dans laquelle est disposé un joint d'étanchéité élastique (21), par lequel une fente annulaire entre le piston de fermeture (18) et le canal de remplissage (10) peut être rendue étanche, **caractérisé en ce que** l'épaisseur radiale (26) du joint d'étanchéité (21) est inférieure à la profondeur (27) de la rainure annulaire (20) et une source d'air comprimé est reliée par un canal de pression au fond (28) de la rainure annulaire (20) dans le piston de fermeture (18), dans lequel la source d'air comprimé est la chambre de travail de fermeture (12) .

2. Dispositif selon la revendication 1, **caractérisé en ce que** le canal de pression débouche dans la rainure annulaire (20) en plusieurs points de sortie distribués uniformément à la périphérie du fond (28) de la rainure annulaire (20).

3. Dispositif selon l'une quelconque des revendications précédentes, **caractérisé en ce que** plusieurs rainures annulaires radialement périphériques parallèles l'une à l'autre sont formées dans la surface latérale radialement périphérique du piston de fermeture, dans lesquelles est chaque fois disposé un joint d'étanchéité élastique, dont l'épaisseur radiale est inférieure à la profondeur de la rainure annulaire respective, dans lequel la fente annulaire entre le piston de fermeture et le canal de remplissage peut être rendue étanche au moyen des joints d'étanchéité et chaque fond des rainures annulaires est relié à la source d'air comprimé par un canal de pression.

4. Dispositif selon l'une quelconque des revendications précédentes, **caractérisé en ce que** le canal de pression est guidé à travers la barre de fermeture (16).

5. Dispositif selon l'une quelconque des revendications précédentes, **caractérisé en ce que** le piston d'entraînement (11) présente dans sa surface latérale radialement périphérique une rainure annulaire de piston de travail (23), dans laquelle un joint d'étanchéité de piston de travail (24) est disposé, dans lequel la source d'air comprimé est reliée par un autre canal de pression (22) au fond (29) de la rainure annulaire de piston de travail (23) dans le piston d'entraînement (11).

6. Dispositif selon la revendication 4, **caractérisé en ce que** le joint d'étanchéité de piston de travail (24) présente une épaisseur radiale inférieure à la profondeur de la rainure annulaire de piston de travail (23) .

7. Dispositif selon une des revendications 5 et 6, **caractérisé en ce que** l'autre canal de pression débouche dans la rainure annulaire de piston de travail en plusieurs points de sortie distribués uniformément à la périphérie du fond de la rainure annulaire de piston de travail.

8. Dispositif selon l'une quelconque des revendications 4 et 5 à 7, **caractérisé en ce que** le canal de pression et l'autre canal de pression sont formés par un seul canal de pression axial (22) guidé à travers le piston de travail (11), la barre de fermeture (16) et le piston de fermeture (18).
